(19) **Europäisches Patentamt**
**European Patent Office**
**Office européen des brevets**

(11) **EP 4 170 323 B1**

(12) **EUROPÄISCHE PATENTSCHRIFT**

(45) Veröffentlichungstag und Bekanntmachung des Hinweises auf die Patenterteilung:
**09.10.2024 Patentblatt 2024/41**

(21) Anmeldenummer: **22201016.7**

(22) Anmeldetag: **12.10.2022**

(51) Internationale Patentklassifikation (IPC):
***G01N 21/71*** *(2006.01)* ***G01N 25/18*** *(2006.01)*

(52) Gemeinsame Patentklassifikation (CPC):
**G01N 25/18**

(54) **TEMPERATURLEITFÄHIGKEITSMESSGERÄT**

THERMAL DIFFUSIVITY MEASURING APPARATUS

APPAREIL DE MESURE DE LA DIFFUSIVITÉ THERMIQUE

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität: **22.10.2021 DE 102021127596**

(43) Veröffentlichungstag der Anmeldung:
**26.04.2023 Patentblatt 2023/17**

(73) Patentinhaber: **Linseis Messgeräte GmbH 95100 Selb (DE)**

(72) Erfinder:
• **LINSEIS, Vincent**
**95028 Hof (DE)**
• **LINSEIS, Florian**
**95100 Selb (DE)**
• **FEULNER, Sebastian**
**95463 Bindlach (DE)**

(74) Vertreter: **Gramm, Lins & Partner Patent- und Rechtsanwälte PartGmbB Frankfurter Straße 3 C 38122 Braunschweig (DE)**

(56) Entgegenhaltungen:
DE-A1- 102019 005 420    JP-A- 2018 025 560
US-A- 4 928 254

• ZHANG YUFENG ET AL: "Suspended 2D anisotropic materials thermal diffusivity measurements using dual-wavelength flash Raman mapping method", INTERNATIONAL JOURNAL OF HEAT AND MASS TRANSFER, vol. 145, 3 October 2019 (2019-10-03), XP085863689, ISSN: 0017-9310, DOI: 10.1016/J.IJHEATMASSTRANSFER.2019.118795

EP 4 170 323 B1

**Beschreibung**

Die Erfindung betrifft eine Temperaturleitfähigkeitsmessgerät gemäß dem Oberbegriff von Anspruch 1. Ein derartiges Temperaturleitfähigkeitsmessgerät ist somit insbesondere ausgebildet zum Messen der Temperaturleitfähigkeit anhand des sogenannten Lichtpuls-Verfahrens.

Derartige Temperaturleitfähigkeitsmessgeräte werden zum Bestimmen der Temperaturleitfähigkeit an Proben verwendet, die in der Regel eine Dicke zwischen 0,1 mm und 6 mm haben, sofern die Temperaturleitfähigkeit der Probe hinreichend klein ist. Die Messung der Temperaturleitfähigkeit wird oft in Abhängigkeit von der Temperatur durchgeführt. Es hat sich herausgestellt, dass Proben existieren, für die die temperaturabhängige Temperaturleitfähigkeit nicht über den vollen Temperaturbereich mit zufriedenstellender Messunsicherheit möglich ist.

Es ist zudem bekannt, die Temperaturleitfähigkeit mittels des sogenannten Angström-Verfahrens zu messen, bei dem eine Probe mit einem Laserstrahl bestrahlt wird, dessen Intensität mit einer vorgegebenen Frequenz moduliert ist. Es hat sich jedoch herausgestellt, dass auch dieses Verfahren bei temperaturabhängigen Messungen nicht über den vollen Temperaturbereich mit geringer Messunsicherheit möglich ist.

US 2016/0033431 A1 beschreibt eine Vorrichtung zum Durchführen des Angström-Verfahrens. Infrarotlicht von einer Infrarotquellen wird mittels einer Linse auf die zu untersuchende Probe fokussiert. Die von der Probe emittierte Infrarotstrahlung wird mittels eines Lichtleiters zu einem Strahlungsthermometer geleitet.

Die US 2006/0153269 A1 beschreibt ebenfalls eine Vorrichtung zum Durchführen des Angström-Verfahrens, bei dem sowohl das modulierte Laserlichtsignal als auch das modulierte Temperatursignal gemessen werden.

Die EP 0 394 932 B1 beschreibt ein Verfahren, bei dem eine Probe wiederholt mit einem Laser bestrahlt wird, der an- und abgeschaltet wird. Mittels eines Pilot-Lichtstrahls kann die Stelle auf dem Prüfling anvisiert werden, der danach mit dem Laser bestrahlt wird.

Die DE 10 2019 005 420 A1 beschreibt ein Verfahren, bei dem ein beschichtetes Objekt mit einem intensitätsmodulierten Laserstrahl bestrahlt wird. Mittels einer Infrarotkamera wird die Erwärmung des Objekts ortsaufgelöst gemessen. Aus der Phasenverschiebung der gemessenen Temperatur relativ zum intensitätsmodulierten Laserstrahl wird die Wärmeleitfähigkeit ortsaufgelöst berechnet.

Die JP 2018 025 560 A beschreibt ein Verfahren, bei dem mittels eines Lasers ein Prüfling mittels eines intensitätsmodulierten Laserstrahls bestrahlt wird. Mittels einer Infrarotkamera wird die Erwärmung des Objekts flächig gemessen und aus den Messergebnissen die Wärmeleitfähigkeit in der Ebene, also senkrecht zum Auftreffen Laserstrahl, gemessen.

Die US 4 928 254 beschreibt das Laserpuls-Verfahren, bei dem der Prüfling mittels eines Laserpulses erwärmt wird. Wenn dieser Laserpuls nicht sichtbar ist, wird ein Helium-Neon-Gläser verwendet, dessen Lichtstrahl im gleichen Lichtpfad verläuft wie der Laserpuls, um so den Auftreffpunkt auf der Probe einstellen zu können.

Der Artikel "Suspended 2D anisotropic materials thermal diffusivity measurements using dual-wavelength flash Raman mapping method" von Zhang et al, International Journal of Heat and Mass Transfer, Bd. 145, 3. Oktober 2019 .(2019-10-03), XP085863689, ISSN: 0017-9310 beschreibt die In diesem Beitrag wird ein Zwei-Wellenlängen-Raman-Pulsverfahren zur Charakterisierung der Temperaturleitfähigkeit von anisotropen 2D-Materialien. Mit Hilfe eines Heizlaserstrahls und eines Sondenlaserstrahls mit unterschiedlicher Wellenlänge kann die Kristallorientierung durch eine stationäre Temperaturkarte bestimmt werden. Durch Modulation der beiden kontinuierlichen Laserstrahlen in periodische gepulste Laserstrahlen können die transienten Heiz- und Abkühlkurven an verschiedenen Positionen entlang der Hauptachsen gemessen werden, indem die Verzögerungszeit zwischen den beiden gepulsten Laserstrahlen und die Position des Messlaserpunkts verändert werden.

Der Erfindung liegt die Aufgabe zugrunde, die Temperaturleitfähigkeitsmessung zu verbessern.

Die Erfindung löst das Problem durch ein Temperaturleitfähigkeitsmessgerät mit den Merkmalen von Anspruch 1.

Die Erfindung löst das Problem zudem durch ein Verfahren mit den Merkmalen von Anspruch 12. Dieses Verfahren wird vorzugsweise mittels eines erfindungsgemäßen Temperaturleitfähigkeitsmessgeräts durchgeführt. Bevorzugten Ausgestaltungen des erfindungsgemäßen Verfahrens sind oben im Rahmen des Verfahrens angegeben, das die Auswerteeinheit durchführt.

Der Dauerstrichlaser ist angeordnet zum Abgeben des Laserstrahls in den Lichtpfad.

Es ist möglich, nicht aber notwendig, dass die Lichtquelle einen Lichteinkoppler aufweist, der angeordnet ist zum Einkoppeln des Laserstrahls in den Lichtpfad.

Erfindungsgemäß ist die Auswerteeinheit ausgebildet zum automatischen Berechnen der Temperaturleitfähigkeit der Probe aus der zeitabhängigen Infrarot-Strahlungsintensität und der Intensitätsmodulationsfrequenz und insbesondere der Dicke der Probe, sowie gegebenenfalls eines Seitversatzes zwischen einer optischen Achse des Infrarotsensors und einem Auftreffpunkt des Laserstrahls auf die Probe.

Die Lichtquelle weist auch eine Pulslichtquelle auf. Vorzugsweise ist die Pulslichtquelle ein Pulslaser zum Abgeben der Lichtpulse. Der Pulslaser kann ein Nd:YAG-Laser sein, der bei 1064 nm emittiert.

Alternativ kann die Pulslichtquelle eine Blitzlichtlampe, beispielsweise eine Xenon-Blitzlichtlampe, aufweisen.

Günstig ist es, wenn sich eine Wellenlänge des Dauerstrichlasers sich von der Wellenlänge der Pulslichtquelle unterscheidet. Vorteilhaft an einem solchen Temperaturleitfähigkeitsmessgerät ist, dass auch an solchen Proben die Temperaturleitfähigkeit mit vergleichsweise geringer Messunsicherheit gemessen werden kann, deren Produkt aus Dicke und Temperaturleitfähigkeit und/oder deren Quotient aus Dicke und Temperaturleitfähigkeit sich während des Messprozesses ändert. Nimmt beispielsweise die Temperaturleitfähigkeit der Probe während der Messung zu, so steigt in der Regel die Messunsicherheit bei der Verwendung des Lichtpuls-Verfahrens.

Ist die Auswerteeinheit erfindungsgemäß ausgebildet, um an einer Probe für jede Temperatur jeweils sowohl mittels des Lichtpuls-Verfahrens als auch mittels des Angström-Verfahrens die Temperaturleitfähigkeit zu messen, kann, insbesondere ausschließlich, der Messwert desjenigen Verfahrens verwendet werden, das die kleinere Messunsicherheit hat. Auf diese Weise kann die Temperaturleitfähigkeit stets mit der kleinstmöglichen Messunsicherheit bestimmt werden.

Dieser Vorteil ist häufig dann relevant, wenn die untersuchte Probe sich während der Messung irreversibel ändert. Erfindungsgemäß ist auch ein Verfahren, bei dem mittels eines erfindungsgemäßen Temperaturleitfähigkeitsmessgeräts die Temperaturleitfähigkeit gemessen wird.

Bevorzugt wird bei einem solchen Verfahren eine Probe vermessen, deren Temperaturleitfähigkeit sich beim Erwärmen irreversibel ändert. Hierunter wird insbesondere verstanden, dass die Temperaturleitfähigkeit bei der gleichen Temperatur der Probe davon abhängt, ob diese Probe auf eine Temperatur oberhalb einer Schwellentemperatur erhitzt wurde. Beispielsweise wird eine Probe vermessen, die sich beim Überschreiten einer Aktivierungstemperatur irreversibel ausdehnt. Ein derartiges Material kann beispielsweise ein intumeszierendes Material sein.

Dadurch, dass der Laserstrahl in den Lichtpfad eingekoppelt wird, ist sichergestellt, dass die Temperaturleitfähigkeit mit beiden Verfahren an der gleichen Stelle der Probe durchgeführt wird. Systematische Messabweichungen werden so minimiert. In seiner allgemeinsten Form löst die Erfindung das Problem durch ein gattungsgemäßes Leitfähigkeitsmessgerät, bei dem die Lichtquelle ausgebildet ist zum Abgeben eines intensitätsmodulierten Laserstrahls, dessen Intensität mit einer Intensitätsmodulationsfrequenz moduliert ist. Es ist dann bevorzugt, dass die Lichtquelle eine Pulslichtquelle, insbesondere einen Pulslaser erfasst, der zum Abgeben der Lichtpulse und zum Abgeben von Pulsfolgen mit einer Pulsfolgenfrequenz von zumindest 50 kHz und/oder maximal 500 kHz ausgebildet ist.

Im Rahmen der vorliegenden Beschreibung wird unter dem Merkmal, dass die Auswerteeinheit ausgebildet ist zum automatischen Berechnen der Temperaturleitfähigkeit der Probe anhand der zeitabhängigen Infrarot-Strahlungsintensität insbesondere verstanden, dass bei der Berechnung die Infrarot-Strahlungsintensität verwendet wird, das heißt in die Berechnung einfließen. In der Regel fließen in die Berechnung weitere Größen ein, insbesondere die Dicke der Probe.

Unter dem Merkmal, dass die Temperaturleitfähigkeit der Probe anhand der zeitabhängigen Infrarot-Strahlungsintensität berechnet wird, wird verstanden, dass diese Infrarot-Strahlungsintensität von dem Lichtpuls verursacht wurde.

In anderen Worten ist die Auswerteeinheit erfindungsgemäß ausgebildet zum automatischen Berechnen der Temperaturleitfähigkeit der Probe anhand der zeitabhängigen Infrarot-Strahlungsintensität, die von genau einem Lichtpuls hervorgerufen wurde. Dies ist die Lichtpuls-Methode.

Günstig ist es, wenn die Intensitätsmodulationsfrequenz größer ist als 0,01 Hz, insbesondere größer als 0,1 Hz. Vorzugsweise beträgt die Intensitätsmodulationsfrequenz höchstens 500 kHz, insbesondere höchstens 300 kHz.

Gemäß einer bevorzugten Ausführungsform weist die Lichtquelle die Pulslichtquelle in Form einer Blitzlichtlampe auf. Die Blitzlichtlampe kann eine Edelgas-Blitzlichtlampe sein, bei der der Lichtpuls durch Ionisation eines Edelgases entsteht. Vorzugsweise ist die Blitzlichtlampe eine Xenon- oder Krypton-Blitzlichtlampe.

Günstig ist es, wenn der intensitätsmoduliertem Laserstrahl durch die Blitzlichtlampe verläuft. Hierunter ist insbesondere zu verstehen, dass der intensitätsmodulierte Laserstrahl in einer Ebene, die senkrecht zu seiner Ausbreitungsrichtung verläuft, von einer Projektion der Blitzlichtlampe auf diese Ebene umgeben ist. Alternativ oder zusätzlich verläuft der intensitätsmoduliertem Laserstrahl durch eine konvexe Hülle der Blitzlichtlampe. Die konvexe Hülle der Blitzlichtlampe ist der Raumbereich aller Punkte, die auf Verbindungsstrecken zweier Punkte der Blitzlichtlampe liegen.

Günstig ist es beispielsweise, wenn die Blitzlampe eine gekrümmt verlaufende Blitzröhre aufweist. Die Blitzlampe hat beispielsweise eine Pulsdauer von mindestens 0,05 ms und/oder maximal 20 ms, insbesondere höchstens 10 ms, besonders bevorzugt höchstens 5 ms.

Die Blitzlampe kann aus zwei oder mehr Teil-Lampen aufgebaut sein, die parallel geschaltet sind.

Vorzugsweise besitzt das Temperaturleitfähigkeitsmessgerät einen Probenwechsler, der einen Probenhalter und zumindest einen zweiten Probenhalter aufweist. In jedem Probenhalter kann zumindest eine Probe, deren Temperaturleitfähigkeit gemessen werden soll, aufgenommen werden. Beispielsweise besitzt der Probenwechsler 3, 4, 5 oder mehr Probenhalter. In der Regel ist es günstig, wenn die Zahl der Probenhalter kleiner ist als 100, insbesondere kleiner als 50.

Vorzugsweise ist die Auswerteeinheit eingerichtet zum automatischen Durchführen eines Verfahrens mit den Schritten: (i) Messen der Temperaturleitfähigkeit einer ersten Probe, die vom ersten Probenhalter gehalten wird, mittels des intensitätsmodulierten Laserstrahls, also mit dem Angström-Verfahren, oder mittels des Lichtpulses, (ii) Ansteuern des Probenwechslers, sodass eine zweite Probe, die vom zweiten Probenhalter gehalten wird, in den Lichtpfad gebracht wird, (iii) Messen der Temperaturleitfähigkeit der zumindest einen Probe mittels des Verfahrens gemäß Schritt (i), also das Messen der Temperaturleitfähigkeit mittels des Angström-Verfahrens oder mittels des Lichtpulses, und (iv) danach Messen der Temperaturleitfähigkeit der Proben mittels des Verfahrens, das in Schritt (i) nicht verwendet wurde.

Es ist in anderen Worten möglich, dass im Schritt (i) nur mittels des intensitätsmodulierten Laserstrahls gemessen wird. Dann wird im Schritt (iv) mittels des Lichtpulses gemessen. Alternativ wird in Schritt (i) mittels des Lichtpulses gemessen und im Schritt (iv) mittels des intensitätsmodulierten Laserstrahls. Vorteilhaft daran ist, dass stets zwei Temperaturleitfähigkeitsmesswerte vorliegen. Stellt sich nach einer Messreihe heraus, dass eines der beiden Temperaturleitfähigkeitsmessverfahren keine brauchbaren Ergebnisse liefert und/oder eine zu hohe Messunsicherheit aufweist, können die Messwerte des anderen Verfahrens verwendet werden. Das erlaubt eine weitgehend automatisierte Messung. Zwar bedeutet das Durchführen der beiden Temperaturleitfähigkeitsmessungen einen etwas höheren Zeitaufwand, dieser Nachteil wird aber durch den Vorteil überkompensiert, dass eine deutlich höhere Chance besteht, zumindest einen Temperaturleitfähigkeitsmesswert mit einer hinreichend kleinen Messunsicherheit zu messen.

Vorzugsweise ist die Auswerteeinheit eingerichtet zum automatischen Durchführen eines Verfahrens mit den Schritten: (i) Messen der Temperaturleitfähigkeit der ersten Probe mittels intensitätsmodulierten Laserstrahls, also mittels des Angström-Verfahrens, (ii) Ansteuern des Probenwechslers, sodass die zweite Probe in den Lichtpfad gebracht wird, (iii) Messen der Temperaturleitfähigkeit der zumindest einen zweiten Probe mittels intensitätsmodulierten Laserstrahls und danach (iv) Messen der Temperaturleitfähigkeit der ersten und der zumindest einen zweiten Probe mittels Lichtpulses. In anderen Worten werden insbesondere zunächst alle Proben mittels des Angström-Verfahrens vermessen und danach mittels des Lichtpuls-Verfahrens. Der Vorteil daran ist, dass beim Angström-Verfahren nur eine vergleichsweise kleine Wärmemenge in die jeweilige Probe eingebracht wird. Sofern die Temperatur der Probe relevant ist, ist daher nach der Messung eine kurze Zeit ausreichend, um die Wärme wieder abzugeben, die in die Probe eingebracht wurde.

Um die Temperaturleitfähigkeit in Abhängigkeit von der Temperatur messen zu können, besitzt das Temperaturleitfähigkeitsmessgerät vorzugsweise einen Ofen, der zum Einstellen einer vorgegebenen Temperatur ausgebildet ist. Der Probenhalter ist im Ofen angeordnet, sodass die Probe auf die vorgegebene Temperatur bringbar ist.

Die Auswerteeinheit ist dann vorzugsweise eingerichtet zum automatischen Durchführen eines Verfahrens mit den Schritten: (i) Ansteuern des Ofens, sodass der Ofen auf die vorgegebene Temperatur gebracht wird, (ii) Erfassen, dass der Ofen die erste vorgegebene Temperatur hat, (iii) Messen der Temperaturleitfähigkeiten der zumindest einen Probe im Probenhalter mittels intensitätsmodulierten Laserstrahls und/oder mittels Lichtpuls und (iv) Wiederholen der vorgenannten Schritten für zumindest eine zweite vorgegebene Temperatur, die sich von der ersten Temperatur unterscheidet.

Vorteilhaft an diesem Temperaturleitfähigkeitsmessgerät ist insbesondere, dass die Chancen deutlich höher sind als bei bekannten Geräten, dass zumindest ein Temperaturleitfähigkeitsmesswert erhalten wird, der eine hinreichend kleine Messunsicherheit aufweist, in der Regel ohne, dass dies zu einer signifikant längeren Messzeit führt. Der Grund dafür ist, dass das Bringen der Proben auf die vorgegebene Temperatur der geschwindigkeitsbestimmende Schritt ist.

Gemäß einer bevorzugten Ausführungsform ist die Auswerteeinheit eingerichtet ist zum automatischen Durchführen eines Verfahrens mit den Schritten (i) Erfassen, dass der Ofen die erste vorgegebene Temperatur hat, (ii) Messen der Temperaturleitfähigkeit der erste Probe mittels des intensitätsmodulierten Laserstrahls oder mittels des Laserpulses, (iii) Ansteuern des Probenwechslers, sodass die zumindest eine zweite Probe (14.2) in den Laserpuls-Lichtpfad (20) gebracht wird, (iv) Messen der Temperaturleitfähigkeit der zumindest eine zweiten Probe mit dem Verfahrens, das in Schritt (ii) verwendet wurde, (v) Messen der Temperaturleitfähigkeit mit dem Verfahren, das in Schritt (ii) nicht verwendet wurde, und (vi) Wiederholen dieser Schritte (i) bis (v) für zumindest eine zweite vorgegebene Temperatur, die sich von der ersten Temperatur unterscheidet. Günstig ist es, wenn nach dem Schritt (ii) vor dem Schritt (iii) der Schritt des Messens der Temperaturleitfähigkeit mit dem Verfahren, das in Schritt (ii) nicht verwendet wurde, durchgeführt wird.

Vorzugsweise ist die Auswerteeinheit eingerichtet zum automatischen Durchführen eines Verfahrens mit den Schritten: (i) Messen der Temperaturleitfähigkeit mittels intensitätsmodulierten Laserstrahls an zumindest zwei Stellen der Probe und (ii) Bestimmen einer Messunsicherheit der Messung der Temperaturleitfähigkeit mittels Lichtpuls. Vorzugsweise umfasst das Verfahren zudem den Schritt des Verminderns der Anzahl an Stellen, an denen die Temperaturleitfähigkeit gemessen wird, wenn die Messunsicherheit einen vorgegebenen Messunsicherheits-Schwellenwert überschreitet. Insbesondere kann die Anzahl an Stellen auf null reduziert werden.

Die ortsaufgelöste Temperaturleitfähigkeitsmessung liefert eine detailliertere Aussage über die Eigenschaften der untersuchten Probe. Diese Messung ist jedoch zeitaufwendig. Stellt sich heraus, dass der Messunsicherheits-Schwellenwert überschritten ist und damit die Messunsicherheit zu groß ist, kann diese zeitaufwendige Messung automatisch beendet werden. Ist in anderen Worten die Messunsicherheit so groß, dass keine belastbare Aussage mehr möglich ist, wird die Anzahl an Stellen, an denen die Temperaturleitfähigkeit gemessen wird, verringert, gegebenenfalls auf null.

Die Messunsicherheit kann beispielsweise dadurch bestimmt werden, dass die zeitabhängig erfassten Infrarot-Strahlungsintensitäten, also die zeitabhängig erfassten Messwerte für die Infrarot-Strahlungsintensität, mit einer Modellfunktion angepasst werden. Das Anpassen kann auch als Anfitten bezeichnet werden. Der mittlere quadratische Fehler, der bei der optimalen Anpassung zwischen der Modellfunktion und den tatsächlichen Messwerten existiert, ist ein Maß für die Messunsicherheit. Überschreitet dieser mittlere quadratische Fehler einen vorgegebenen Schwellenwert, so wird davon ausgegangen, dass die Messunsicherheit den Messunsicherheits-Schwellenwert überschritten hat.

Vorzugsweise ist die die Auswerteeinheit eingerichtet ist zum automatischen Durchführen eines Verfahrens mit den Schritten: (a) Messen der Temperaturleitfähigkeit mittels Lichtpuls, sodass ein Lichtpuls-Temperaturleitfähigkeitsmesswert erhalten wird, (b) ortsaufgelöstes Messen der Temperaturleitfähigkeit mittels intensitätsmodulierten Laserstrahls an zumindest zwei Stellen, sodass ein Angström-Temperaturleitfähigkeitsmesswert erhalten wird, und (c) Berechnen eines Inhomogenitätsparameters, der eine Inhomogenität der Temperaturleitfähigkeit der Probe beschreibt, aus dem Lichtpuls-Temperaturleitfähigkeitsmesswert und den Angström-Temperaturleitfähigkeitsmesswerten.

Vorteilhaft daran ist, dass der Inhomogenitätsparameter besonders schnell bestimmt werden kann. Bei Geräten aus dem Stand der Technik müssen zunächst eine Vielzahl an Temperaturleitfähigkeiten an unterschiedlichen Orten der Probe gemessen werden. Aus diesen Temperaturleitfähigkeiten wird dann der Mittelwert bestimmt und anhand dieses Mittelwerts werden dann die Abweichungen zwischen dem Mittelwert und dem jeweiligen lokal gemessenen Messwert bestimmt. Der Lichtpuls-Temperaturleitfähigkeitsmesswert stellt ebenfalls einen Mittelwert der Temperaturleitfähigkeit über die beleuchtete Fläche dar und kann deutlich schneller bestimmt werden als mittels des Angström-Verfahrens.

Der Inhomogenitätsparameter hängt auf eineindeutige Weise von der Inhomogenität der Temperaturleitfähigkeit der Probe ab. Beispielsweise kann der Inhomogenitätsparameter die mittlere quadratische Abweichung der Messwerte zum Mittelwert, insbesondere zum Lichtpuls-Temperaturleitfähigkeitsmesswert, sein. Alternativ kann der Inhomogenitätsparameter beispielsweise das Maximum der Abweichungen sein.

Vorzugsweise ist der Probenhalter zum Positionieren der Proben in zwei Positionsfreiheitsgraden quer zu einer optischen Achse des Infrarotsensors ausgebildet. Beispielsweise ist der erste Positionsfreiheitsgrad ein Drehfreiheitsgrad. In anderen Worten ist der Probenhalter ausgebildet zum Drehen um eine Probenhalter-Drehachse. Alternativ oder zusätzlich ist der zweite Positionsfreiheitsgrad eine Radialkomponente, das heißt, dass der Probenhalter ausgebildet ist zum Bewegen der Proben so, dass sich der Abstand zur Probenhalter-Drehachse verändert. Es ist aber auch möglich, dass der Probenhalter einen x-y-Tisch aufweist. Wiederum alternativ kann ein Positionsfreiheitsgrad der Seitversatz sein. In anderen Worten kann der Seitversatz geändert werden, um die Stelle zu ändern, an der der Laserstrahl auf die Probe trifft.

Es kann vorteilhaft sein zu wissen, an welcher Stelle genau die Temperaturleitfähigkeit gemessen wird. Beispielsweise besitzt das Temperaturleitfähigkeitsmessgerät daher eine Kamera, die angeordnet ist zum Aufnehmen eines Bilds der Probe und insbesondere auch des Laserstrahls. Beispielsweise ist die Kamera für sichtbares Licht und/oder für Infrarotlicht empfindlich.

Gemäß einer bevorzugten Ausführungsform besitzt das Temperaturleitfähigkeitsmessgerät eine Kamera, die angeordnet ist zum Aufnehmen eines Bilds der Probe und insbesondere auch des Laserstrahls.

Erfindungsgemäß ist zudem ein Temperaturleitfähigkeitsmessgerät mit (a) einer Lichtquelle, die einen Dauerstrichlaser aufweist, der ausgebildet ist zum Abgeben eines intensitätsmodulierten Laserstrahls, dessen Intensität mit einer Intensitätsmodulationsfrequenz moduliert ist, (b) einer Auswerteeinheit, die ausgebildet ist zum automatischen Berechnen der Temperaturleitfähigkeit der Probe aus der zeitabhängigen Infrarot-Strahlungsintensität, und (c) einer Kamera, die angeordnet ist zum Aufnehmen eines Bilds der Probe und insbesondere auch des Laserstrahls. Es ist günstig, wenn dieses Temperaturleitfähigkeitsmessgerät zudem alle Merkmale gemäß des Hauptanspruchs aufweist, das ist aber nicht notwendig. Die in dieser Beschreibung genannten bevorzugten Ausführungsformen gelten auch für diese Erfindung.

Günstig ist es, wenn die Optik zum Verschieben des Lichtpfads quer zur optischen Achse des Infrarotsensors ausgebildet ist, sodass ein Seitversatz s zwischen der optischen Achse des Infrarotsensors und einem Auftreffpunkt des Laserstrahls einstellbar ist. Es ist dann möglich, eine Anisotropie der Temperaturleitfähigkeit zu messen.

Vorzugsweise weist die Optik eine Strahlaufweiter. Der Strahlaufweiter umfasst vorzugsweise zumindest eine Linse. Günstig ist es, wenn der Strahlaufweiter so ausgebildet, dass die strahlaufweitende Wirkung für das Licht der Pulslichtquelle größer ist als für das Licht des Dauerstrichlasers. Vorzugsweise beträgt ein Brechungsindex für das Licht der Pulslichtquelle zumindest das 1,2-fache, insbesondere zumindest das 1,3-fache, besonders bevorzugt zumindest das 1,5-fache des Brechungsindex für Licht der Pulslichtquelle.

Das automatische Berechnen der Temperaturleitfähigkeit $\alpha$ der Probe anhand der zeitabhängigen Infrarot-Strahlungsintensität und der Intensitätsmodulationsfrequenz $f_I$ erfolgt vorzugsweise anhand der Formel

$$\theta = L \sqrt{\frac{\pi}{\alpha}} \sqrt{f_I} \, ,$$

wobei θ eine Phasenverschiebung zwischen der modulierten Intensität des Laserstrahls einerseits und der Infrarot-Strahlungsintensität $I_{22}$ andererseits ist, L die Dicke L der Probe und π die Kreiszahl. Unter dem Merkmal, dass die Berechnung anhand dieser Formel erfolgt, wird verstanden, dass eine Berechnung durchgeführt wird, die die gleiche Verknüpfung der angegebenen Formelgrößen beinhaltet wie die angegebene Formel. Es ist selbst verständlich möglich, dass statt der angegebenen Größen andere Größen angegeben werden, die eineindeutig, insbesondere linear, mit der in der Formel angegebenen Größe zusammenhängen. Beispielsweise kann statt der Phasenverschiebung θ selbstverständlich die Differenz einer ersten Phasenverschiebung der Intensität des Laserstrahls bezüglich einer fest vorgegebenen Referenzfrequenz einerseits und einer zweiten Phasenverschiebung der Infrarot-Strahlungsintensität relativ zur gleichen fest vorgegebenen Referenzfrequenz verwendet werden. Das automatische automatisch Berechnen der Temperaturleitfähigkeit α der Probe anhand der zeitabhängigen Infrarot-Strahlungsintensität $I_{22}$, erfolgt vorzugsweise anhand der Formel

$$\alpha = 0.13879 \frac{L^2}{t_{1/2}},$$

wobei $t_{1/2}$ die Halbanstiegszeit bezeichnet. Die Halbanstiegszeit $t_{1/2}$ ist diejenige Zeit, die vergeht zwischen dem Auftreffen des Lichtpulses auf der Probe und dem Zeitpunkt, bis die Temperatur die Hälfte eines Temperaturmaximums erreicht hat. Das Temperaturmaximum ist die höchste Temperatur, die die Probe aufgrund des Lichtpulses erreicht.

Unter einem Verfahren zum Messen der Temperaturleitfähigkeit wird insbesondere auch ein Verfahren zum Messen der Wärmeleitfähigkeit verstanden, wenn die angegebene Berechnung verwendet wird und zudem die Dichte und die spezifische Wärmekapazität des Stoffes zur Berechnung verwendet werden.

Im Folgenden wird die Erfindung anhand der beigefügten Zeichnungen näher erläutert. Dabei zeigt

Figur 1      einen maßstabsgerechten Querschnitt durch ein erfindungsgemäßes Temperaturleitfähigkeitsmessgerät gemäß einer Ausführungsform der Erfindung,

Figur 2a      eine schematische Zeichnung des Temperaturleitfähigkeitsmessgeräts gemäß Figur 1,

Figur 2b      ein Diagramm, in dem die zeitabhängigen Infrarotintensitäten beim Lichtpuls-Verfahren dargestellt sind, und

Figur 3a      ein Diagramm, in dem die zeitabhängigen Infrarotintensitäten beim Angström-Verfahren dargestellt sind,

Figur 3b      eine schematische Darstellung einer Probenoberfläche der Probe mit den Stellen, an denen der Laserstrahl auftrifft,

Figur 4a      einen Querschnitt durch ein erfindungsgemäßes Temperaturleitfähigkeitsmessgerät gemäß einer zweiten Ausführungsform der Erfindung,

Figur 4b      eine Querschnittsansicht einer Blitzlampe des Temperaturleitfähigkeitsmessgeräts nach Figur 4a,

Figur 4c      eine Querschnittsansicht einer zweiten Ausführungsform einer Blitzlampe des Temperaturleitfähigkeitsmessgeräts nach Figur 4a und

Figur 5      eine perspektivische Schnittansicht einer Lichtquelle eines erfindungsgemäßen Temperaturleitfähigkeitsmessgerät gemäß einer zweiten Ausführungsform der Erfindung.

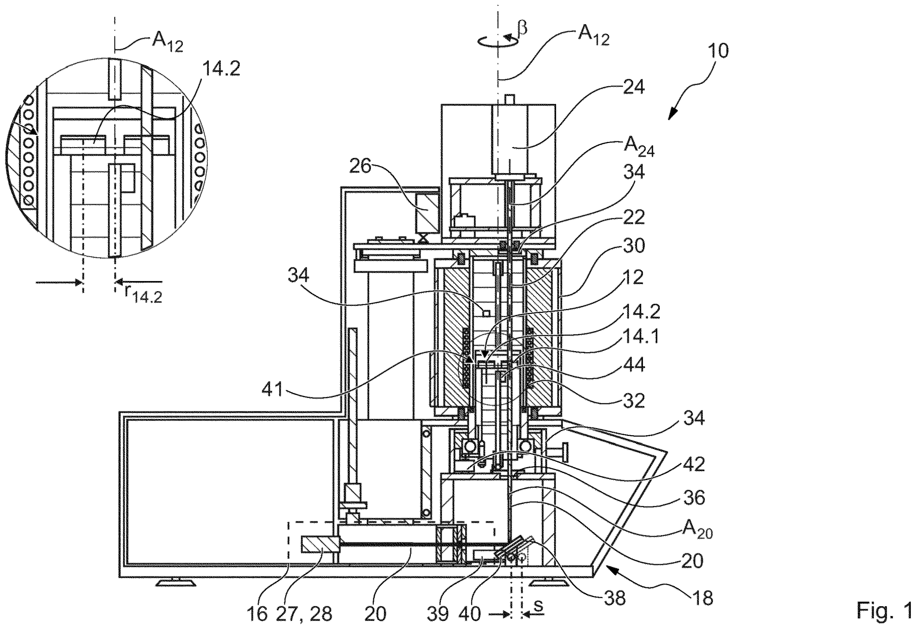

Figur 1 zeigt ein Temperaturleitfähigkeitsmessgerät 10, das einen Probenhalter 12 zum Aufnehmen von zumindest einer ersten Probe 14.1 und einer zweiten Probe 14.2 aufweist. Eine Lichtquelle 16 gibt im Betrieb jeweils einzelne Lichtpulse ab. Jeder Lichtpuls hat eine Impulsenergie W von vorzugsweise zwischen W = 5 J und W = 50 J.

Die Lichtpulse werden mittels einer Optik 18 auf einem Lichtpfad 20 geleitet werden. Trifft der Lichtpuls auf die Probe 14.1, so gibt diese Infrarotstrahlung 22 ab. Diese Infrarotstrahlung 22 wird mit einer Sammeloptik gebündelt und die Infrarot-Strahlungsintensität $I_{22}(t)$ des entstehenden Infrarotlichtstrahls mittels eines Infrarotsensors 24 in Abhängigkeit von der Zeit t gemessen wird. Die Infrarot-Strahlungsintensität $I_{22}(t)$ wird von einer Auswerteeinheit 26 erfasst.

Die Lichtquelle 16 weist eine Pulslichtquelle 27 in Form eines Pulslaser 28 auf, bei dem es sich beispielsweise um einen, insbesondere gütegeschalteten, Nd:YAG-Laser handeln kann.

Der Probenhalter 12 ist in einem Ofen 30 angeordnet, der mittels eines Heizelements 32, bei dem es sich insbesondere um ein elektrisches Heizelement handelt, auf eine vorgegebene Temperatur T gebracht werden kann.

Der Ofen 30 hat vorzugsweise ein Thermometer 34, mittels dem die Temperatur T der Proben 14.i (i = 1, 2, ..) gemessen werden kann. Die Auswerteeinheit 26 oder eine andere Regelung regeln eine Heizleistung des Ofens 30 anhand dieser Temperatur auf die vorgegebene Temperatur T.

Der Infrarotsensor 24 hat ein Gesichtsfeld, das durch eine Blende 34, insbesondere eine Iris, definiert wird und um eine optische Achse $A_{24}$ verläuft. Die Probe 14.1 liegt vollständig im Sichtfeld $S_{24}$ des Infrarotsensors 24, sodass der Infrarotsensor 24 ausschließlich Infrarotstrahlung 22 erfasst, die von der Probe 14.1 ausgeht.

Günstig ist es, wenn das Temperaturleitfähigkeitsmessgerät 10 eine Justiereinheit 34 aufweist, mittels der der Ofen 30 relativ zum Lichtpfad 20 justiert werden kann.

Die Optik 18 besitzt einen Strahlaufweiter 36, beispielsweise eine Linse. Im vorliegenden Fall umfasst die Optik 18 zudem einen Umlenkspiegel 38. Der Strahlaufweiter 36 ist so ausgebildet, dass die strahlaufweitende Wirkung für das Licht der Pulslichtquelle 27 größer ist als für das Licht des Dauerstrichlasers 46. Im vorliegenden Fall beeinflusst die Linse nur das Licht der Pulslichtquelle 27.

Es ist möglich und in der vorliegenden Ausführungsform vorgesehen, nicht aber notwendig, dass der Umlenkspiegel mittels einer Führung 40 verschieblich gelagert ist. Es ist damit möglich, den Lichtpfad 20 quer zur optischen Achse $A_{24}$ des Infrarotsensors 24 um einen Seitversatz s zu verschieben. Eine optische Achse $A_{20}$ des Lichtpfads 20 verläuft nach dem Verschieben parallel zur optischen Achse $A_{24}$, weist aber einen seitlichen Versatz zu dieser auf.

Die Probenhalter 12 ist Teil eines Probenwechslers 41, an dem die Probenhalter 12.i für die Proben 14.i ausgebildet sind. Mittels eines Drehantriebs 42 sind die Probenhalter 12.i kollektiv um eine Probenhalter-Drehachse $A_{12}$ drehbar und es ist eine vorgegebene Winkellage β des Probenwechslers 41 einstellbar. Mittels eines schematisch eingezeichneten Positionierantriebs 44 ist zudem ein Abstand $r_{14.i}$ der Proben 14.i von der Probenhalter-Drehachse $A_{12}$ einstellbar. Auf diese Weise ist jede Probe 14.i in den zwei Freiheitsgraden β und r quer zur optischen Achse $A_{20}$ positionierbar.

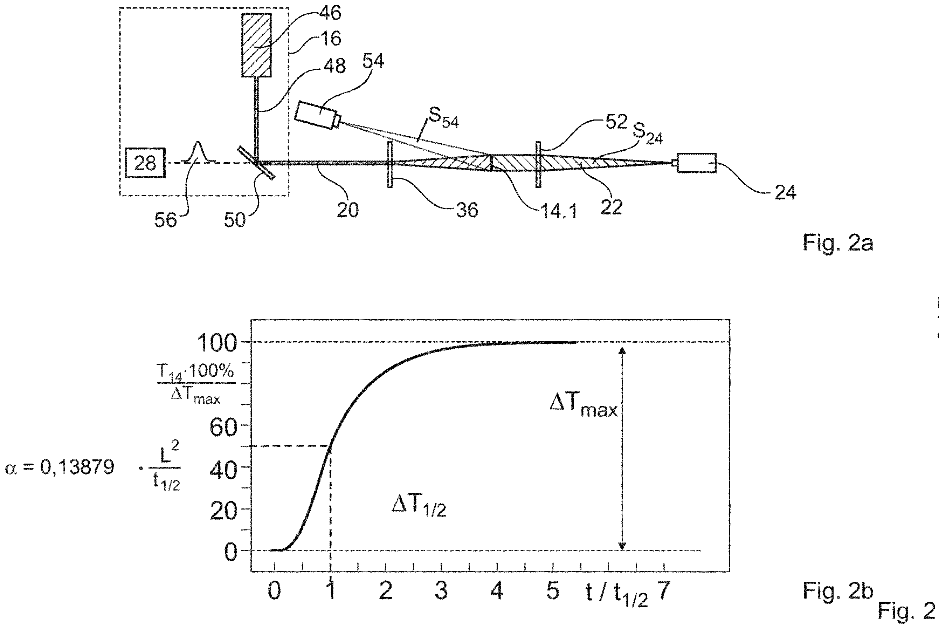

Figur 2a zeigt eine schematische Ansicht des Temperaturleitfähigkeitsmessgeräts 10 gemäß Figur 1. Es ist zu erkennen, dass die Lichtquelle 16 zudem einen Dauerstrichlaser 46 aufweist, mittels dem ein intensitätsmodulierter Laserstrahl 48 abgegeben werden kann. Eine Intensität $I_{48}$ des Laserstrahls lässt sich dann anhand der Formel

$$I_{48} = I_0 I \sin 2\pi f_I \qquad\qquad (1)$$

beschreiben.

Mittels eines Lichteinkopplers 50 wird der Laserstrahl 48 in den Lichtpfad 20 eingekoppelt. Im vorliegenden Fall ist der Lichteinkoppler 50 durch einen dichroitischen Spiegel gebildet. Wenn ein dichroitischer Spiegel als Lichteinkoppler verwendet wird, ist es notwendig, dass die zwei Lichtquellen zwei voneinander verschiedene Wellenlängen besitzen. Alternativ kann der Lichteinkoppler 50 beispielsweise ein Strahlteiler sein. Statt des dichroitischen Spiegels kann der Lichteinkoppler beispielsweise auch als bewegbarer, beispielsweise wegklappbarer Spiegel ausgebildet sein, der von einem Antrieb bewegbar ist.

Figur 2a zeigt zudem, dass hinter der Probe 14.1 eine Sammellinse 52 angeordnet ist, die die Infrarotstrahlung 22, die von der Probe 14.1 abgegeben wird, auf den Infrarotsensor 24 fokussiert.

Figur 2a zeigt zudem, dass das Temperaturleitfähigkeitsmessgerät 10 eine Kamera 54 aufweisen kann, in deren Sichtfeld $S_{54}$ die Probe 14.1 liegt. In anderen Worten kann mittels der Kamera 54 ein Bild derjenigen Fläche der Probe 14.1 aufgenommen werden, auf die auch die Lichtpulse und der Laserstrahl 48 fallen.

Figur 2b zeigt schematisch die Abhängigkeit einer vom Infrarotsensor 24 gemessenen Temperatur $T_{14}$ der Probe 14.1, wenn ein Lichtpuls 56 auf die Probe 14.1, die eine Dicke L hat, auftrifft. Zum Zeitpunkt t = 0 wird der Lichtpuls auf die Probe 14.1 abgegeben. Nach der Halbanstiegszeit $t_{1/2}$ ist die Temperatur $T_{24}$ auf die Hälfte des Maximalwerts $\Delta T_{max}$ angestiegen, den die Temperatur maximal erreicht. Anhand der Formel

$$\alpha = 0.13879 \frac{L^2}{t_{1/2}} \qquad\qquad (2)$$

wird von der Auswerteeinheit 26 aus der Halbanstiegszeit $t_{1/2}$ die Temperaturleitfähigkeit α berechnet.

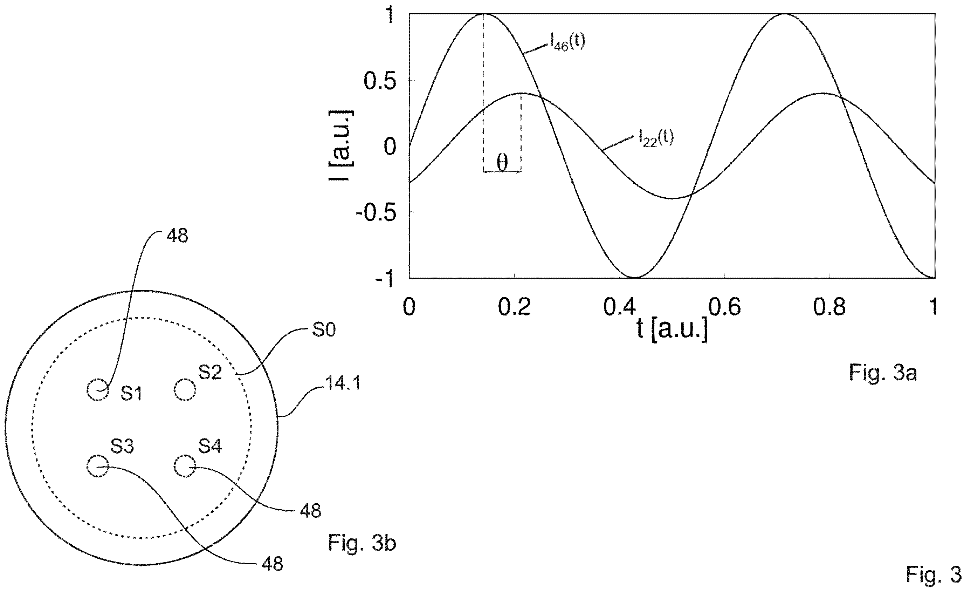

Das Temperaturleitfähigkeitsmessgerät führt ein erfindungsgemäßes Verfahren dadurch durch, dass die Auswerteeinheit 26 zunächst die Lichtquelle 16 so ansteuert, dass der Pulslaser 28 einen Lichtpuls abgibt. Dieser trifft auf die Probe 14.1 und beleuchtet eine Stelle S0, wie schematisch in Figur 3 gezeigt ist.

Der Infrarotsensor 24 erfasst kontinuierlich und zeitabhängig die Intensität der Infrarotstrahlung 22, wie sie in Figur 2b dargestellt ist. Daraus wird anhand der angegebenen Zeichnung aus der in der Auswerteeinheit 26 gespeicherten Dicke L der Probe 14.1 und der Halbanstiegszeit $t_{1/2}$ die Temperaturleitfähigkeit $\alpha_{14.1}$ berechnet.

Sofern zumindest zwei Proben 14.i vorhanden sind, wird danach von der Auswerteeinheit 26 der Probenwechsler 41, insbesondere dessen Drehantrieb 42, so angesteuert, dass die zweite Probe 14.2 in den Lichtpfad 20 bewegt wird. Danach wird an der zweiten Probe mittels des Lichtpulses dessen Temperaturleitfähigkeit $\alpha_{14.2}$ bestimmt. Nachfolgend werden die Temperaturleitfähigkeiten $\alpha_{14.i}$ der verbleibenden Proben auf die gleiche Art und Weise vermessen.

Nachfolgend steuert die Auswerteeinheit 26 den Dauerstrichlaser 46 so an, dass dieser einen intensitätsmodulierten Laserstrahl 48 erzeugt, der an einem ersten Auftreffpunkt, der auch als erste Stelle S1 bezeichnet werden kann, auf die Probe 14.1 trifft. Anhand der Formel

$$\theta = L\sqrt{\frac{\pi}{\alpha}}\sqrt{f_I} \qquad (3)$$

wird von der Auswerteeinheit 26 aus einer Phasenverschiebung $\theta$ zwischen der Intensitätsmodulation des Laserstrahls 48 einerseits und der Infrarot-Strahlungsintensität $I_{22}$ andererseits, der Intensitätsmodulationsfrequenz $f_I$ und der Infrarot-Strahlungsintensität $I_{22}$ sowie der Dicke L sowie der Kreiszahl $\pi$ die Temperaturleitfähigkeit $\alpha$ bestimmt. Wenn der Verlauf der Messdaten von der linearen Abhängigkeit der Phasenverschiebung $\theta$ von der Wurzel der Intensitätsmodulationsfrequenz $f_I$ abweicht, werden lediglich Messdaten $\theta(\sqrt{f_I})$ in dem Intervall verwendet, in dem die lineare Abhängigkeit besteht.

Nachfolgend werden der Positionierantrieb 44 und/oder der Drehantrieb 42 von der Auswerteeinheit 26 so angesteuert, dass der Laserstrahl 48 auf eine zweite Stelle S2 trifft. Es ist zu erkennen, dass die Durchmesser der Flächen an den Stellen S1, S2, die vom intensitätsmodulierten Laserstrahl 48 beleuchtet werden, deutlich kleiner sind als der Durchmesser der vom Lichtpuls beleuchteten Fläche der Stelle S0. Insbesondere betragen die Durchmesser der Flächen an den Stellen S1, S2 höchstens die Hälfte, bzw. höchstens ein Drittel, besonders bevorzugt höchstens ein Viertel, des Durchmessers der vom Lichtpuls beleuchteten Fläche.

Soll die Temperaturleitfähigkeit $\alpha$ als von der Temperatur T abhängig gemessen werden, so steuert die Auswerteeinheit 26 den Ofen 30 so an, dass dieser nacheinander verschiedene Temperaturen $T_j$ anfährt. Selbstverständlich ist es auch möglich, dass eine andere Steuerung oder Regelung die Ansteuerung des Ofens 30 durchführt. Erfasst die Auswerteeinheit 26, dass die jeweilige Temperatur T erreicht ist, führt sie das oben beschriebene Verfahren durch.

Um die Lage des Laserstrahls 48 auf der Probe 14.1 zu erfassen, wird mittels der Kamera 54 ein Bild aufgenommen. Es ist möglich, nicht aber notwendig, dass dabei der Laserstrahl 48 auf die Probe fällt. Wenn die Kamera 54, wie gemäß einer bevorzugten Ausführungsform vorgesehen, im Infrarotbereich empfindlich ist, kann die Lage des Laserstrahls 48 auf der Probe 14.1 direkt aufgenommen werden. Das zumindest eine Bild kann in einem digitalen Speicher der Auswerteeinheit 26 gespeichert werden. Es ist dann möglich, den Ort, an dem die Temperaturleitfähigkeit gemessen wurde, direkt einem Ort auf der Oberfläche der Probe zuzuordnen.

Um die Temperaturleitfähigkeit quer zur optischen Achse $A_{24}$ des Infrarotsensors 24 zu messen, wird der Umlenkspiegel 38 mittels eines Verschiebeantriebs 39 so bewegt, dass er einen Seitversatz s zur optischen Achse $A_{24}$ des Infrarotsensors 24 hat.

Die Temperaturleitfähigkeit $\alpha_q$ quer zur optischen Achse $A_{24}$ des Infrarotsensors 24 wird von der Auswerteeinheit 26 anhand der Formel

$$\theta = L\sqrt{\frac{\pi}{\alpha_q}}\sqrt{f_I}\,s \qquad (4)$$

berechnet. Wenn der Verlauf der Messdaten $\theta(s)$ von der linearen Abhängigkeit der Phasenverschiebung $\theta$ vom Seitversatz s abweicht, werden lediglich Messdaten $\theta(s)$ in dem Intervall verwendet, in dem die lineare Abhängigkeit besteht.

Für jede der Messungen der Temperaturleitfähigkeit wird zudem eine Messunsicherheit $u_{ist}$ berechnet. Dazu wird die mittlere quadratische Abweichung zwischen den Kurven gemäß der Formeln ( 3 ) oder ( 4 ) oder Abschnitten der Kurven einerseits und den gemessenen Messwerten andererseits berechnet.

Die Kurve gemäß Figur 2b lässt sich bei Annahme einer adiabatischen Aufheizung beschreiben als

$$T(x = L, t) = \frac{q_0}{\rho c_p V}\left[1 + 2\sum_{n=1}^{\infty}(-1)^n \exp\left(-\frac{n^2\pi^2\alpha t}{L^2}\right)\right] \qquad (5)$$

Darin ist $q_0$ die Laserenergiedichte, $c_p$ die spezifische Wärmekapazität, $\rho$ die Dichte der Probe und V das Volumen der Probe

Figur 3a zeigt die Abhängigkeit des zeitlichen Verlaufs der Infrarot-Strahlungsintensität $I_{22}(t)$ von der Zeit t in beliebigen Einheiten einerseits und die Abhängigkeit des zeitlichen Verlaufs der Laser-Strahlungsintensität $I_{46}(t)$ des Dauerstrichlasers 46 von der Zeit t andererseits. Die Phasenverschiebung $\theta$ kann wie eingezeichnet beispielsweise aus der zeitlichen Lage der jeweiligen maximal bestimmt werden.

Steigt die Messunsicherheit $u_{ist}$ über einen vorgegebenen Messunsicherheits-Schwel-lenwert $u_{max}$, so kann eine Warnmeldung ausgegeben werden. Diese Warnmeldung kann akustisch, optisch oder elektrisch ausgegeben werden.

Es ist möglich, dass die Zahl der Stellen Si, an der die Temperaturleitfähigkeit gemessen wird, reduziert wird, insbesondere auf null reduziert wird, wenn der Messunsicherheits-Schwellenwert $u_{max}$ überschritten ist.

Figur 3b zeigt eine schematische Darstellung einer Probenoberfläche der Probe 14.1 mit den Stellen S1, S2, S3, S4, an denen der Laserstrahl 48 auftrifft, um die Temperaturleitfähigkeit ortsaufgelöste zu messen. Die Stelle S0 bezeichnet den Bereich, der vom Lichtpuls 56 beleuchtet wird. Es ist zu erkennen, dass durch die Größe der Stelle S0 ein Mittelungseffekt eintritt.

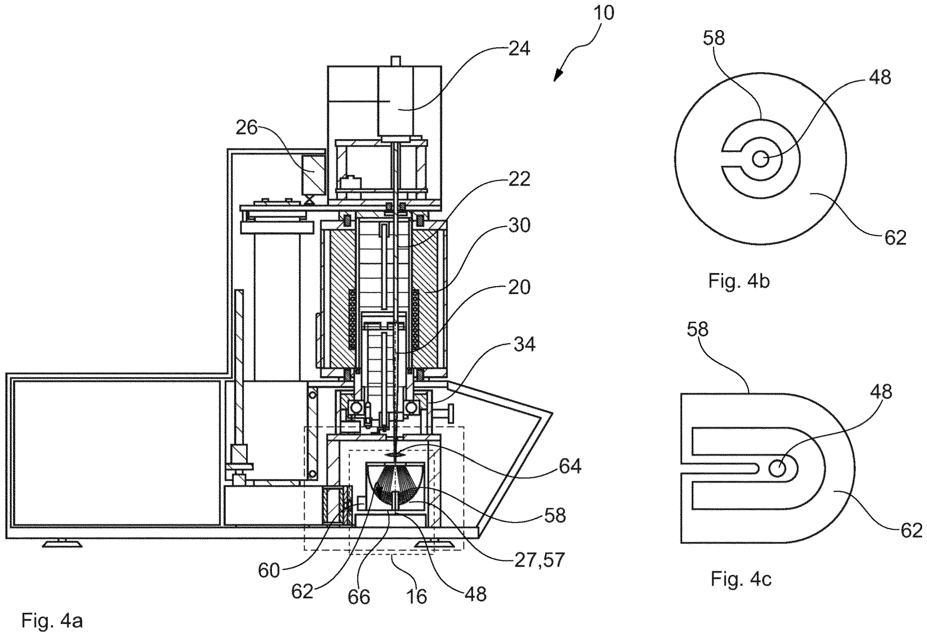

Figur 4a zeigt eine zweite Ausführungsform eines erfindungsgemäßen Temperaturleitfähigkeitsmessgeräts 10, bei dem die Pulslichtquelle 27 der Lichtquelle 16 durch eine Blitzlichtlampe 57 gebildet ist. Im vorliegenden Fall ist die Blitzlichtlampe 56 eine Xenon-Blitzlichtlampe. Die Blitzlichtlampe 57 besitzt eine Blitzröhre 58, die von einer Ladeschaltung 60 mit einem Strompuls beaufschlagt wird und dann einen Lichtblitz abgibt.

Das Licht des Lichtblitzes wird von einem Reflektor 62 auf eine Sammeloptik 64 reflektiert. Die Sammeloptik 64 formt einen Lichtpuls, der sich entlang des Lichtpfads 20 ausbreitet. Im Reflektor 62 ist eine Öffnung 66 ausgebildet, durch die der Laserstrahl 48 hindurchtritt. Dadurch verläuft der Laserstrahl 48 durch die Blitzlampe 57 durch.

Figur 4b zeigt eine zweite bevorzugte Ausführungsform der Blitzröhre 58, die gekrümmt verläuft und im vorliegenden Fall kreisförmig gekrümmt ist. Der Laserstrahl 48 verläuft durch den von der gekrümmten Blitzröhre 58 umgebenden Raum. Schematisch ist der Reflektor 62 eingezeichnet.

Figur 4c zeigt eine dritte bevorzugte Ausführungsform der Blitzröhre 58, die U-förmig gekrümmt verläuft. Der Laserstrahl 48 verläuft ebenfalls durch den von der gekrümmten Blitzröhre 58 umgebenden Raum.

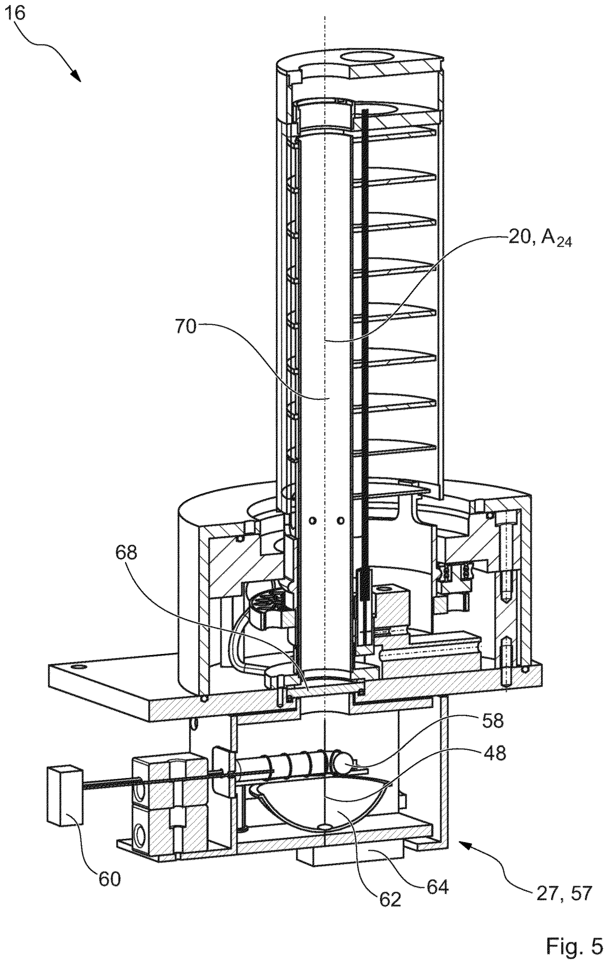

Figur 5 zeigt eine geschnittene perspektivische Ansicht einer Lichtquelle 16 eines erfindungsgemäßen Temperaturleitfähigkeitsmessgeräts. Das Licht der Blitzlichtlampe 57 gelangt durch ein Fenster 68 in ein Lichtleitrohr 70. Das Lichtleitrohr 70 kann auf seiner Innenseite eine reflektierende Beschichtung, beispielsweise aus Gold oder Nickel, aufweisen. Das Lichtleitrohr 70 ist beispielsweise aus Edelstahl, insbesondere Inconel, aufgebaut.

**Bezugszeichenliste**

| | | | |
|---|---|---|---|
| 10 | Temperaturleitfähigkeitsmess-gerät | 66 | Öffnung |
| | | 68 | Fenster |
| 12 | Probenhalter | 70 | Lichtleitrohr |
| 14 | Probe | $\alpha$ | Temperaturleitfähigkeit |
| 16 | Lichtquelle | $\alpha_q$ | Temperaturleitfähigkeit quer zu $A_{24}$ |
| 18 | Optik | | |
| 20 | Lichtpfad | $\beta$ | Winkellage |
| 22 | Infrarotstrahlung | $\theta$ | Phasenverschiebung zwischen der Intensitätsmodulation |
| 24 | Infrarotsensor | | und der Infrarot-Strahlungsintensität |
| 26 | Auswerteeinheit | | |
| 27 | Pulslichtquelle | $A_{24}$ | optische Achse des Infrarotsen-sors |
| 28 | Pulslaser | | |
| 30 | Ofen | $A_{20}$ | optische Achse $A_{20}$ des Licht-pfads |
| 32 | Heizelement | | |
| 34 | Justiereinheit | $A_{24}$ | optischen Achse des Infrarot-sensors |
| 36 | Strahlaufweiter | | |
| 38 | Umlenkspiegel | $A_{12}$ | Drehantrieb-Drehachse |
| 39 | Verschiebeantrieb | $f_l$ | Intensitätsmodulationsfrequenz |
| 40 | Führung | i | Laufindex der Proben |

(fortgesetzt)

| 41 | Probenwechsler | $I_{22}$ | Infrarot-Strahlungsintensität |
|----|----------------|----------|-------------------------------|
| 42 | Drehantrieb | $I_{46}$ | Laser-Strahlungsintensität |
| 44 | Positionierantrieb | L | Dicke |
| 46 | Dauerstrichlaser | $r_{14.i}$ | Abstand der Probe 14.i von der Drehantrieb-Drehachse |
| 48 | Laserstrahl | | |
| 50 | Lichteinkoppler | s | Seitversatz |
| 52 | Sammellinse | S | Sichtfeld |
| 54 | Kamera | t | Zeit |
| 56 | Lichtpuls | T | Temperatur |
| 57 | Blitzlichtlampe | $t_{1/2}$ | Halbanstiegszeit |
| 58 | Blitzröhre | u | Messunsicherheit |
| 60 | Ladeschaltung | $u_{max}$ | Messunsicherheits-Schwel-lenwert |
| 62 | Reflektor | | |
| 64 | Sammeloptik | W | Impulsenergie |

**Patentansprüche**

1. Temperaturleitfähigkeitsmessgerät (10) mit

   (a) einem Probenhalter (12) zum Aufnehmen einer zu vermessenden Probe (14),
   (b) einer Lichtquelle (16), die einen Dauerstrichlaser (46) aufweist, der

   - ausgebildet ist zum Abgeben eines intensitätsmodulierten Laserstrahls (48), dessen Intensität ($I_{48}$) mit einer Intensitätsmodulationsfrequenz (fi) moduliert ist, und
   - angeordnet ist zum Abgeben des Laserstrahls (48) entlang eines Lichtpfads (20)

   (c) einer Optik (18) zum Leiten des Lichtpulses (56) in dem Lichtpfad (20) auf die Probe (14),
   (d) einem Infrarotsensor (24) zum zeitabhängigen Erfassen einer Infrarot-Strahlungsintensität ($I_{22}$), die von der Probe (14) abgegeben wird, und
   (e) einer Auswerteeinheit (26), die ausgebildet ist zum automatischen Berechnen der Temperaturleitfähigkeit ($\alpha$) der Probe (14) anhand der zeitabhängigen Infrarot-Strahlungsintensität ($I_{22}$) und der Intensitätsmodulationsfrequenz ($f_I$),

   **dadurch gekennzeichnet, dass**

   (f) die Lichtquelle (16) eine Pulslichtquelle (27) aufweist und ausgebildet ist zum Abgeben eines Lichtpulses (56) einer vorgegebenen Impulsenergie (W) in dem Lichtpfad (20), und
   (g) die Auswerteeinheit (26) ausgebildet ist zum automatischen Berechnen der Temperaturleitfähigkeit ($\alpha$) der Probe (14) anhand der zeitabhängigen Infrarot-Strahlungsintensität ($I_{22}$), die vom Lichtpuls (56) verursacht wurde.

2. Temperaturleitfähigkeitsmessgerät (10) nach Anspruch 1, **dadurch gekennzeichnet, dass** der intensitätsmodulierte Laserstrahls (48) durch die Blitzlichtlampe (56) verläuft

3. Temperaturleitfähigkeitsmessgerät (10) nach einem der vorstehenden Ansprüche, **gekennzeichnet durch**

   (a) einen Probenwechsler (41), der den ersten Probenhalter (12.1) und zumindest einen zweiten Probenhalter (12.2) aufweist,
   (b) wobei die Auswerteeinheit (26) eingerichtet ist zum automatischen Durchführen eines Verfahrens mit den Schritten

   (i) Messen der Temperaturleitfähigkeit ($\alpha$) einer ersten Probe (14.1), die vom ersten Probenhalter (12.1) gehalten wird, mittels des intensitätsmodulierten Laserstrahls (48) oder mittels des Lichtpulses (56),

(ii) Ansteuern des Probenwechslers (41), sodass eine zweite Probe (14.2), die vom zweiten Probenhalter (12.2) gehalten wird, in den Lichtpfad (20) gebracht wird,

(iii) Messen der Temperaturleitfähigkeit ($\alpha$) der zumindest einen zweiten Probe (14.2) mittels des Verfahrens, das in Schritt (i) verwendet wurde, und

(iv) danach Messen der Temperaturleitfähigkeit ($\alpha$) der Proben (14.1, 14.2) mittels des Verfahrens, das in Schritt (i) nicht verwendet wurde.

4. Temperaturleitfähigkeitsmessgerät (10) nach Anspruch 3, **dadurch gekennzeichnet, dass** die Auswerteeinheit (26) eingerichtet ist zum automatischen Durchführen eines Verfahrens mit den Schritten

(i) Messen der Temperaturleitfähigkeit ($\alpha$) der ersten Probe (14.1) mittels intensitätsmodulierten Laserstrahls (48),

(ii) Ansteuern des Probenwechslers (41), sodass die zweite Probe (14.2) in den Lichtpfad (20) gebracht wird,

(iii) Messen der Temperaturleitfähigkeit ($\alpha$) der zumindest einen zweiten Probe (14.2) mittels intensitätsmodulierten Laserstrahls (48), und

(iv) danach Messen der Temperaturleitfähigkeit ($\alpha$) mittels Lichtpulses (56).

5. Temperaturleitfähigkeitsmessgerät (10) nach einem der vorstehenden Ansprüche, **gekennzeichnet durch**

(a) einen Ofen (30), der ausgebildet ist zum Einstellen einer vorgegebenen Temperatur ($T_1$),

(b) wobei der Probenhalter (12) im Ofen (30) angeordnet ist und

(c) wobei die Auswerteeinheit (26) eingerichtet ist zum automatischen Durchführen eines Verfahrens mit den Schritten

(i) Ansteuern des Ofens (30), sodass der Ofen (30) auf die vorgegebene Temperatur ($T_1$) gebracht wird,

(ii) Erfassen, dass der Ofen (30) die erste vorgegebene Temperatur ($T_1$) hat,

(iii) Messen der Temperaturleitfähigkeiten ($\alpha$) der zumindest einen Probe (14.1) im Probenhalter (12.1) mittels eines intensitätsmodulierten Laserstrahls (48) und mittels eines Lichtpulses (56) und

(iv) Wiederholen dieser Schritte (i) und (iii) für zumindest eine zweite vorgegebene Temperatur ($T_2$), die sich von der ersten Temperatur ($T_1$) unterscheidet.

6. Temperaturleitfähigkeitsmessgerät (10) nach einem der vorstehenden Ansprüche, **dadurch gekennzeichnet, dass** die Auswerteeinheit (26) eingerichtet ist zum automatischen Durchführen eines Verfahrens mit den Schritten

(i) Erfassen, dass der Ofen (30) die erste vorgegebene Temperatur ($T_1$) hat,

(ii) Messen der Temperaturleitfähigkeit ($\alpha$) der erste Probe (14.1) mittels des intensitätsmodulierten Laserstrahls (48) oder mittels des Lichtpulses (56),

(iii) Ansteuern des Probenwechslers (41), sodass die zumindest eine zweite Probe (14.2) in den Lichtpfad (20) gebracht wird,

(iv) Messen der Temperaturleitfähigkeit ($\alpha$) der zumindest eine zweiten Probe (14.2) mit dem Verfahrens, das in Schritt (ii) verwendet wurde,

(v) Messen der Temperaturleitfähigkeit ($\alpha$) mit dem Verfahren, das in Schritt (ii) nicht verwendet wurde, und

(vi) Wiederholen dieser Schritte (i) bis (v) für zumindest eine zweite vorgegebene Temperatur ($T_2$), die sich von der ersten Temperatur ($T_1$) unterscheidet.

7. Temperaturleitfähigkeitsmessgerät (10) nach einem der vorstehenden Ansprüche, **dadurch gekennzeichnet, dass** die Auswerteeinheit (26) eingerichtet ist zum automatischen Durchführen eines Verfahrens mit den Schritten

(i) Messen der Temperaturleitfähigkeit ($\alpha$) mittels intensitätsmodulierten Laserstrahls (48) an zumindest zwei Stellen (S1, S2) der Probe (14),

(ii) Bestimmen einer Messunsicherheit der Messung der Temperaturleitfähigkeit ($\alpha$) mittels Lichtpuls (56),

(iii) ggf. Vermindern der Anzahl an Stellen, wenn die Messunsicherheit (u) einen vorgegebenen Messunsicherheits-Schwellenwert ($u_{max}$) überschreitet.

8. Temperaturleitfähigkeitsmessgerät (10) nach einem der vorstehenden Ansprüche, **dadurch gekennzeichnet, dass** die Auswerteeinheit (26) eingerichtet ist zum automatischen Durchführen eines Verfahrens mit den Schritten

(a) Messen der Temperaturleitfähigkeit ($\alpha$) mittels Lichtpuls (56), sodass ein Lichtpuls-Temperaturleitfähigkeitsmesswert erhalten wird,

(b) ortsaufgelöstes Messen der Temperaturleitfähigkeit ($\alpha$) mittels intensitätsmodulierten Laserstrahls an zumindest zwei Stellen, sodass ein Angström-Temperaturleitfähigkeitsmesswerte erhalten wird, und

(c) Berechnen eines Inhomogenitätsparameters, der eine Inhomogenität der Temperaturleitfähigkeit der Probe (14) beschreibt, aus dem Lichtpuls-Temperaturleitfähigkeitsmesswert und den Angström-Temperaturleitfähigkeitsmesswerten.

9. Temperaturleitfähigkeitsmessgerät (10) nach einem der vorstehenden Ansprüche, **dadurch gekennzeichnet, dass** der Probenhalter (12) zum Positionieren der Proben (14.1, 14.2) in zwei Positionsfreiheitsgraden ($\beta$, r) quer zu einer optischen Achse ($A_{24}$) des Infrarotsensors (24) ausgebildet ist

10. Temperaturleitfähigkeitsmessgerät (10) nach einem der vorstehenden Ansprüche, **gekennzeichnet durch** eine Kamera (54), die angeordnet ist zum Aufnehmen eines Bilds der Probe (14).

11. Temperaturleitfähigkeitsmessgerät (10) nach einem der vorstehenden Ansprüche, **dadurch gekennzeichnet, dass** die Optik (18) zum Verschieben des Lichtpfads (20) quer zur optischen Achse ($A_{24}$) des Infrarotsensors (24) ausgebildet ist, sodass ein Seitversatz (s) zwischen der optischen Achse ($A_{24}$) des Infrarotsensors (24) und einem Auftreffpunkt des Laserstrahls (48) einstellbar ist.

12. Verfahren zum Messen der Temperaturleitfähigkeit, mittels eines Temperaturleitfähigkeitsmessgerät (10) nach einem der vorstehenden Ansprüche, mit den Schritten:

(a) Abgeben eines intensitätsmodulierten Laserstrahls (48), dessen Intensität ($I_{48}$) mit einer Intensitätsmodulationsfrequenz ($f_I$) moduliert ist, auf eine Probe (14), mittels eines Dauerstrichlasers (46), und der entlang des Lichtpfads (20) verläuft, und

(b) zeitabhängiges Erfassen einer Infrarot-Strahlungsintensität ($I_{22}$), die von der Probe (14) abgegeben wird, mittels eines Infrarotsensors (24) und

(c) automatisches Berechnen der Temperaturleitfähigkeit ($\alpha$) der Probe (14) anhand der zeitabhängigen Infrarot-Strahlungsintensität ($I_{22}$) und der Intensitätsmodulationsfrequenz (fi)

**gekennzeichnet durch** die Schritte

(d) Abgeben eines Lichtpulses (56) einer vorgegebenen Impulsenergie (W) entlang eines Lichtpfads (20) auf eine zu vermessende Probe (14) mittels der Lichtquelle (16), die eine Pulslichtquelle (27) aufweist, und

(e) automatisch Berechnen der Temperaturleitfähigkeit ($\alpha$) der Probe (14) anhand der zeitabhängigen Infrarot-Strahlungsintensität ($I_{22}$), die von dem Lichtpuls (56) verursacht wurde.

13. Verfahren nach Anspruch 12, **dadurch gekennzeichnet, dass** das Berechnen der Temperaturleitfähigkeit ($\alpha$) der Probe (14) anhand der zeitabhängigen Infrarot-Strahlungsintensität ($I_{22}$), die von genau einem Lichtpuls verursacht wird, gemäß der Lichtpuls-Methode erfolgt.

**Claims**

1. A thermal diffusivity measuring device (10) with

(a) a sample holder (12) for accommodating a sample (14) to be measured,
(b) a light source (16) that comprises a continuous wave laser (46) which

- is designed to emit an intensity-modulated laser beam (48), the intensity ($I_{48}$) of which is modulated with an intensity modulation frequency ($f_I$), and
- is arranged to emit the laser beam (48) along a light path (20),

(c) an optical system (18) for directing the pulse of light (56) in the light path (20) onto the sample (14),
(d) an infrared sensor (24) for time-dependent detection of an infrared radiation intensity ($I_{22}$) emitted by the sample (14), and
(e) an evaluation unit (26) that is designed to automatically calculate the thermal diffusivity ($\alpha$) of the sample (14) on the basis of the time-dependent infrared radiation intensity ($I_{22}$) and the intensity modulation frequency ($f_I$),

**characterised in that**

(f) the light source (16) has a pulse light source (27) and is designed to emit a pulse of light (56) of a predetermined pulse energy (W) in the light path (20), and

(g) the evaluation unit (26) is designed to automatically calculate the thermal diffusivity ($\alpha$) of the sample (14) on the basis of the time-dependent infrared radiation intensity($I_{22}$) caused by the pulse of light (56).

2. The thermal diffusivity measuring device (10) according to claim 1,
**characterised in that**
the intensity-modulated laser beam (48) passes through the flash lamp (56)

3. The thermal diffusivity measuring device (10) according to one of the preceding claims, **characterised by**

(a) a sample changer (41) that comprises the first sample holder (12.1) and at least one second sample holder (12.2),

(b) the control unit (26) being configured to automatically carry out a method featuring the steps

(i) measuring the thermal diffusivity ($\alpha$) of a first sample (14.1) held by the first sample holder (12.1) by means of the intensity-modulated laser beam (48) or the pulse of light (56),

(ii) controlling the sample changer (41) so that a second sample (14.2) held by the second sample holder (12.2) is brought into the light path (20),

(iii) measuring the thermal diffusivity ($\alpha$) of the at least one second sample (14.2) by means of the method used in step (i), and

(iv) subsequently measuring the thermal diffusivity ($\alpha$) of the samples (14.1, 14.2) by means of the method that was not used in step (i).

4. The thermal diffusivity measuring device (10) according to claim 3,
**characterised in that** the evaluation unit (26) is configured to automatically carry out a method featuring the steps

(i) measuring the thermal diffusivity ($\alpha$) of the first sample (14.1) by means of an intensity-modulated laser beam (48),

(ii) controlling the sample changer (41) such that the second sample (14.2) is brought into the light path (20),

(iii) measuring the thermal diffusivity ($\alpha$) of the at least one second sample (14.2) by means of an intensity-modulated laser beam (48), and

(iv) subsequently measuring the thermal diffusivity ($\alpha$) by means of a pulse of light (56).

5. The thermal diffusivity measuring device (10) according to one of the preceding claims, **characterised by**

(a) a furnace (30) that is designed to set a predetermined temperature ($T_1$),

(b) the sample holder (12) being arranged in the furnace (30) and

(c) the control unit (26) being configured to automatically carry out a method featuring the steps

(i) controlling the furnace (30) so that the furnace (30) is brought up to the predetermined temperature ($T_1$),

(ii) detecting that the furnace (30) is the predetermined temperature ($T_1$),

(iii) measuring the thermal diffusivities ($\alpha$) of the at least one sample (14.1) in the sample holder (12.1) by means of an intensity-modulated laser beam (56) and by means of a pulse of light (56), and

(iv) repeating the steps (i) and (iii) for at least a second predetermined temperature ($T_2$) that differs from the first temperature ($T_1$).

6. The thermal diffusivity measuring device (10) according to one of the preceding claims, **characterised in that** the evaluation unit (26) is configured to automatically carry out a method featuring the steps

(i) detecting that the furnace (30) is the predetermined temperature ($T_1$),

(ii) measuring the thermal diffusivity ($\alpha$) of the first sample (14.1) by means of the intensity-modulated laser beam (48) or the pulse of light (56),

(iii) controlling the sample changer (41) such that the at least one second sample (14.2) is brought into the light path (20),

(iv) measuring the thermal diffusivity ($\alpha$) of the at least one second sample (14.2) by means of the method used in step (ii),

(v) measuring the thermal diffusivity ($\alpha$) by means of the method that was not used in step (ii), and

(vi) repeating the steps (i) to (v) for at least a second predetermined temperature ($T_2$) that differs from the first temperature ($T_1$).

7. The thermal diffusivity measuring device (10) according to one of the preceding claims, **characterised in that** the evaluation unit (26) is configured to automatically carry out a method featuring the steps

(i) measuring thermal diffusivity ($\alpha$) by means of an intensity-modulated laser beam (48) at at least two points (S1, S2) on the sample (14),

(ii) determining a measurement uncertainty of the measurement of the thermal diffusivity ($\alpha$) by means of a pulse of light (56),

(iii) reducing the number of points if the measurement uncertainty (u) exceeds a predetermined measurement uncertainty threshold value ($u_{max}$) where appropriate.

8. The thermal diffusivity measuring device (10) according to one of the preceding claims, **characterised in that** the evaluation unit (26) is configured to automatically carry out a method featuring the steps

(a) measuring the thermal diffusivity ($\alpha$) by means of a pulse of light (56), thereby obtaining a light pulse thermal diffusivity measured value,

(b) time-resolved measurement of thermal diffusivity ($\alpha$) by means of an intensity-modulated laser beam at at least two points, thereby obtaining an Angstrom thermal diffusivity measured value, and

(c) calculating an inhomogeneity parameter that describes an inhomogeneity of the thermal diffusivity of the sample (14) from the light pulse thermal diffusivity measured value and the Angstrom thermal diffusivity measured values.

9. The thermal diffusivity measuring device (10) according to one of the preceding claims, **characterised in that** the sample holder (12) is designed to position the samples (14.1, 14.2) in two positional degrees of freedom ($\beta$, r) transverse to an optical axis ($A_{24}$) of the infrared sensor (24).

10. The thermal diffusivity measuring device (10) according to one of the preceding claims, **characterised by** a camera (54) that is arranged to record an image of the sample (14).

11. The thermal diffusivity measuring device (10) according to one of the preceding claims, **characterised in that** the optical system (18) is designed to displace the light path (20) transverse to the optical axis ($A_{24}$) of the infrared sensor (24), so that a lateral offset (s) between the optical axis ($A_{24}$) of the infrared sensor (24) and a strike point of the laser beam (48) can be adjusted.

12. A method for measuring thermal diffusivity by means a thermal diffusivity measuring device (10) according to one of the preceding claims featuring the steps:

(a) emitting an intensity-modulated laser beam (48),
the intensity ($I_{48}$) of which is modulated with an intensity modulation frequency ($f_I$), onto a sample (14) by means of a continuous wave laser (46) and which runs along the light path (20), and

(b) time-dependent detection of an infrared radiation intensity ($I_{22}$) emitted by the sample (14) by means of an infrared sensor (24), and

(c) automatically calculating the thermal diffusivity ($\alpha$) of the sample (14) on the basis of the time-dependent infrared radiation intensity ($I_{22}$) and the intensity modulation frequency ($f_I$)

**characterised by** the steps

(d) emitting a pulse of light (56) of a predetermined impulse energy (W) along a light path (20) onto a sample (14) to be measured by means of a light source (16), which comprises a pulse light source (27), and

(e) automatically calculating the thermal diffusivity ($\alpha$) of the sample (14) on the basis of the time-dependent infrared radiation intensity ($I_{22}$) caused by the pulse of light (56).

13. The method according to claim 12, **characterised in that** the calculation of the thermal diffusivity ($\alpha$) of the sample (14) on the basis of the time-dependent infrared radiation

intensity($I_{22}$) caused by the pulse of light, is carried out according to the light pulse method.

**Revendications**

1. Appareil de mesure de la diffusivité thermique (10), comprenant

   (a) un porte-échantillon (12) destiné à recevoir un échantillon (14) à mesurer,
   (b) une source de lumière (16) qui comprend un laser à onde continue (46) qui

      - est conçu pour émettre un faisceau laser (48) modulé en intensité, dont l'intensité ($I_{48}$) est modulée à une fréquence de modulation d'intensité ($f_l$), et
      - est disposé pour émettre le faisceau laser (48) le long d'un chemin lumineux (20),

   (c) une optique (18) destinée à guider l'impulsion lumineuse (56) dans le chemin lumineux (20) vers l'échantillon (14),
   (d) un capteur infrarouge (24) destiné à détecter en fonction du temps une intensité de rayonnement infrarouge ($I_{22}$) qui est émise par l'échantillon (14), et
   (e) une unité d'évaluation (26) conçue pour calculer automatiquement la diffusivité thermique (a) de l'échantillon (14) à l'aide de l'intensité de rayonnement infrarouge ($I_{22}$) dépendant du temps et à l'aide de la fréquence de modulation d'intensité ($f_l$) ,

   **caractérisé en ce que**

   (f) la source de lumière (16) comprend une source de lumière impulsionnelle (27) et est conçue pour émettre une impulsion lumineuse (56) d'une énergie d'impulsion (W) prédéfinie dans le chemin lumineux (20), et
   (g) l'unité d'évaluation (26) est conçue pour calculer automatiquement la diffusivité thermique (a) de l'échantillon (14) à l'aide de l'intensité de rayonnement infrarouge ($I_{22}$) dépendant du temps, qui a été provoquée par l'impulsion lumineuse (56).

2. Appareil de mesure de la diffusivité thermique (10) selon la revendication 1,
   **caractérisé en ce que**
   le rayonnement laser (48) modulé en intensité passe par la lampe flash (56).

3. Appareil de mesure de la diffusivité thermique (10) selon l'une des revendications précédentes, **caractérisé par**

   (a) un changeur d'échantillons (41) qui comprend le premier porte-échantillon (12.1) et au moins un deuxième porte-échantillon (12.2),
   (b) l'unité d'évaluation (26) étant conçue pour mettre en oeuvre automatiquement un procédé comprenant les étapes consistant à

      (i) mesurer la diffusivité thermique (a) d'un premier échantillon (14.1), maintenu par le premier porte-échantillon (12.1), au moyen du faisceau laser (48) modulé en intensité ou au moyen de l'impulsion lumineuse (56),
      (ii) commander le changeur d'échantillons (41) de telle sorte qu'un deuxième échantillon (14.2), maintenu par le deuxième porte-échantillon (12.2), est amené jusque dans le chemin lumineux (20),
      (iii) mesurer la diffusivité thermique ($\alpha$) dudit au moins un deuxième échantillon (14.2) au moyen du procédé utilisé à l'étape (i), et
      (iv) mesurer ensuite la diffusivité thermique ($\alpha$) des échantillons (14.1, 14.2) au moyen du procédé qui n'a pas été utilisé à l'étape (i).

4. Appareil de mesure de la diffusivité thermique (10) selon la revendication 3, **caractérisé en ce que** l'unité d'évaluation (26) est conçue pour mettre en oeuvre automatiquement un procédé comprenant les étapes consistant à

   (i) mesurer la diffusivité thermique ($\alpha$) du premier échantillon (14.1) au moyen d'un faisceau laser (48) modulé en intensité,
   (ii) (ii) commander le changeur d'échantillons (41) de telle sorte que le deuxième échantillon (14.2) est amené jusque dans le chemin lumineux (20),
   (iii) mesurer la diffusivité thermique ($\alpha$) dudit au moins un deuxième échantillon (14.2) au moyen d'un faisceau laser (48) modulé en intensité, et

(iv) mesurer ensuite la diffusivité thermique ($\alpha$) au moyen d'une impulsion lumineuse (56).

5. Appareil de mesure de la diffusivité thermique (10) selon l'une des revendications précédentes, **caractérisé par**

(a) un four (30) conçu pour régler une température prédéterminée ($T_1$),
(b) le porte-échantillon (12) étant disposé dans le four (30), et
(c) l'unité d'évaluation (26) étant conçue pour mettre en oeuvre automatiquement un procédé comprenant les étapes consistant à

(i) commander le four (30) de telle sorte que le four (30) est amené à la température prédéterminée ($T_1$),
(ii) (ii) détecter que le four (30) est à la première température prédéterminée ($T_1$),
(iii) mesurer les diffusivités thermiques ($\alpha$) dudit au moins un échantillon (14.1) dans le porte-échantillon (12.1) au moyen d'un faisceau laser (48) modulé en intensité et au moyen d'une impulsion lumineuse (56), et
(iv) répéter ces étapes (i) et (iii) pour au moins une deuxième température prédéterminée ($T_2$) qui est différente de la première température ($T_1$).

6. Appareil de mesure de la diffusivité thermique (10) selon l'une des revendications précédentes, **caractérisé en ce que** l'unité d'évaluation (26) est conçue pour mettre en oeuvre automatiquement un procédé comportant les étapes consistant à

(i) détecter que le four (30) est à la première température prédéterminée ($T_1$),
(ii) (ii) mesurer la diffusivité thermique ($\alpha$) du premier échantillon (14.1) au moyen du faisceau laser (48) modulé en intensité ou au moyen de l'impulsion lumineuse (56),
(iii) commander le changeur d'échantillons (41) de telle sorte que ledit au moins un deuxième échantillon (14.2) est amené jusque dans le chemin lumineux (20),
(iv) mesurer la diffusivité thermique ($\alpha$) dudit au moins un deuxième échantillon (14.2) par le procédé utilisé à l'étape (ii),
(v) mesurer la diffusivité thermique ($\alpha$) par le procédé qui n'a pas été utilisé à l'étape (ii), et
(vi) répéter ces étapes (i) à (v) pour au moins une deuxième température prédéterminée ($T_2$) qui est différente de la première température ($T_1$).

7. Appareil de mesure de la diffusivité thermique (10) selon l'une des revendications précédentes, **caractérisé en ce que** l'unité d'évaluation (26) est conçue pour mettre en oeuvre automatiquement un procédé comprenant les étapes consistant à

(i) mesurer la diffusivité thermique ($\alpha$) au moyen d'un faisceau laser (48) modulé en intensité en au moins deux endroits (S1, S2) de l'échantillon (14),
(ii) (ii) déterminer une incertitude de la mesure de la diffusivité thermique ($\alpha$) au moyen d'une impulsion lumineuse (56),
(iii) le cas échéant, diminuer le nombre d'endroits lorsque l'incertitude de mesure (u) dépasse une valeur seuil d'incertitude de mesure prédéterminée ($u_{max}$).

8. Appareil de mesure de la diffusivité thermique (10) selon l'une des revendications précédentes, **caractérisé en ce que** l'unité d'évaluation (26) est conçue pour mettre en oeuvre automatiquement un procédé comprenant les étapes consistant à

(a) mesurer la diffusivité thermique ($\alpha$) au moyen d'une impulsion lumineuse (56), de manière à obtenir une valeur de mesure de diffusivité thermique par impulsion lumineuse,
(b) mesurer à résolution spatiale la diffusivité thermique ($\alpha$) au moyen d'un faisceau laser modulé en intensité en au moins deux endroits, de manière à obtenir des valeurs de mesure de diffusivité thermique en Angström, et
(c) calculer un paramètre d'inhomogénéité décrivant une inhomogénéité de la diffusivité thermique de l'échantillon (14) à partir de la valeur de mesure de diffusivité thermique par impulsion lumineuse et des valeurs de mesure de diffusivité thermique en Angström.

9. Appareil de mesure de la diffusivité thermique (10) selon l'une des revendications précédentes, **caractérisé en ce que** le porte-échantillons (12) est conçu pour positionner les échantillons (14.1, 14.2) selon deux degrés de liberté de position ($\beta$, r) transversalement à un axe optique ($A_{24}$) du capteur infrarouge (24).

**10.** Appareil de mesure de la diffusivité thermique (10) selon l'une des revendications précédentes, **caractérisé par** une caméra (54) agencée pour prendre une image de l'échantillon (14).

**11.** Appareil de mesure de la diffusivité thermique (10) selon l'une des revendications précédentes, **caractérisé en ce que** l'optique (18) est conçue pour déplacer le chemin lumineux (20) transversalement à l'axe optique ($A_{24}$) du capteur infrarouge (24), de manière à permettre de régler un décalage latéral (s) entre l'axe optique ($A_{24}$) du capteur infrarouge (24) et un point d'incidence du faisceau laser (48).

**12.** Procédé de mesure de la diffusivité thermique au moyen d'un appareil de mesure de la diffusivité thermique (10) selon l'une des revendications précédentes, comprenant les étapes consistant à :

(a) émettre vers un échantillon (14) un faisceau laser (48) modulé en intensité, dont l'intensité ($I_{48}$) est modulée à une fréquence de modulation d'intensité ($f_I$), au moyen d'un laser à onde continue (46), qui passe le long du chemin lumineux (20), et

(b) détecter en fonction du temps une intensité de rayonnement infrarouge ($I_{22}$), émise par l'échantillon (14), au moyen d'un capteur infrarouge (24), et

(c) calculer automatiquement la diffusivité thermique ($\alpha$) de l'échantillon (14) à l'aide de l'intensité de rayonnement infrarouge ($I_{22}$) dépendant du temps et à l'aide de la fréquence de modulation d'intensité ($f_I$), **caractérisé par** les étapes consistant à

(d) émettre une impulsion lumineuse (56) d'une énergie d'impulsion prédéterminée (W) le long d'un chemin lumineux (20) vers un échantillon (14) à mesurer au moyen d'une source de lumière (16) qui comprend une source de lumière impulsionnelle (27), et

(e) calculer automatiquement la diffusivité thermique ($\alpha$) de l'échantillon (14) à partir de l'intensité de rayonnement infrarouge ($I_{22}$) dépendant du temps, qui a été provoquée par l'impulsion lumineuse (56).

**13.** Procédé selon la revendication 12, **caractérisé en ce que** le calcul de la diffusivité thermique ($\alpha$) de l'échantillon (14) s'effectue à l'aide de l'intensité de rayonnement infrarouge ($I_{22}$) dépendant du temps, qui est provoquée par exactement une impulsion lumineuse, selon la méthode de l'impulsion lumineuse.

Fig. 1

46

16

48

54

$S_{54}$

52 $S_{24}$

28

56

50

20

36

14.1

22

24

Fig. 2a

100

$\dfrac{T_{14} \cdot 100\%}{\Delta T_{max}}$

$\Delta T_{max}$

60

$\alpha = 0{,}13879 \quad \cdot \dfrac{L^2}{t_{1/2}}$

40

$\Delta T_{1/2}$

20

0

0   1   2   3   4   5   $t / t_{1/2}$   7

Fig. 2b

Fig. 2

Fig. 3a

Fig. 3b

Fig. 3

EP 4 170 323 B1

Fig. 4a

Fig. 4b

Fig. 4c

16

20, A$_{24}$

70

68

58

48

60

62

64

27, 57

Fig. 5

**IN DER BESCHREIBUNG AUFGEFÜHRTE DOKUMENTE**

**In der Beschreibung aufgeführte Patentdokumente**

- US 20160033431 A1
- US 20060153269 A1
- EP 0394932 B1
- DE 102019005420 A1
- JP 2018025560 A
- US 4928254 A

**In der Beschreibung aufgeführte Nicht-Patentliteratur**

- **ZHANG et al.** Suspended 2D anisotropic materials thermal diffusivity measurements using dual-wavelength flash Raman mapping method. *International Journal of Heat and Mass Transfer,* 03. Oktober 2019, vol. 145, ISSN 0017-9310